# EUROPEAN PATENT SPECIFICATION

(11) **EP 3 786 685 B1**
(45) Date of publication and mention of the grant of the patent: **12.08.2026**
(21) Application number: 19194952.8
(22) Date of filing: 02.09.2019
(51) Int. Cl.: G02B 21/00, G02B 21/36

(54) **CONTROL DEVICE AND METHOD FOR CONTROLLING A MICROSCOPE, MICROSCOPE AND COMPUTER PROGRAM PRODUCT**
STEUERUNGSVORRICHTUNG UND VERFAHREN ZUR STEUERUNG EINES MIKROSKOPS, MIKROSKOP UND COMPUTERPROGRAMMPRODUKT
DISPOSITIF DE COMMANDE ET PROCÉDÉ DE COMMANDE D'UN MICROSCOPE, MICROSCOPE ET PRODUIT PROGRAMME INFORMATIQUE

(43) Date of publication of application: 03.03.2021
(73) Proprietor: Leica Microsystems CMS GmbH, 35578 Wetzlar (DE)
(72) Inventor: FAHRBACH, Florian, 68167 Mannheim (DE)
(74) Representative: Schaumburg und Partner Patentanwälte mbB

(56) References cited:
- WO-A1-2013/053454
- WO-A1-2013/184762
- WO-A1-2018/089839
- WO-A2-2007/124437
- JP-A- H09 250 912
- MATTHEW B BOUCHARD ET AL: "Swept confocally-aligned planar excitation (SCAPE) microscopy for high speed volumetric imaging of behaving organisms - Suppl. Information 1", NATURE PHOTONICS, 1 February 2015 (2015-02-01), England, pages 113 - 119, XP055491984, Retrieved from the Internet <URL:https://media.nature.com/original/nature-assets/nphoton/journal/v9/n2/extref/nphoton.2014.323-s1.pdf> [retrieved on 20180712], DOI: 10.1038/nphoton.2014.323

## Description

The invention relates to a microscope, such as an oblique plane microscope or a SCAPE microscope, and to a method of controlling a microscope, such as an oblique plane microscope or a SCAPE microscope.

In prior art solutions of an oblique plane microscope, a sample is moved relative to a static light sheet. In those prior art solutions commonly translation stages are applied. A stack of images may be recorded in an oblique plane microscope if the sample is moved along an optical axis of the objective.

In a SCAPE microscope a light sheet is moved within a scan range through a sample by means of a scanner positioned in the illumination light path and in the observation light path. With SCAPE, it is further cumbersome to record a large sample area that is wider than the field of view of the objective.

WO 2018/089839 A1 discloses Light Sheet Theta (LS-8) Microscopy with large sample imaging capabilities. The microscope comprises a light sheet projector having light scanning and focusing optics as well as a controller connected to control the light scanning and focusing optics to translate the light sheet being raised. The microscope may further comprise a translating stage connected to move a sample support to permit the sequentially scanning of portions of a sample.

A further light sheet microscope is disclosed in WO 2013/053454 A1.

The present invention solves the above problem using a microscope as defined in claim 1.

The present invention further improves prior art methods of controlling a microscope in that the method comprises adjusting a sample volume velocity of a sample volume, and adjusting a light sheet velocity of a light sheet depending on the sample volume velocity. If different portions of a sample are recorded by movement of the sample, the required acceleration of the sample may be performed either fast to obtain a high throughput or slow and with caution. Both approaches are disadvantageous as high accelerations for fast scanning results in large forces acting on the sample, which may deform or relocate the sample and slow movement of the sample requires adopting a frame rate of recording of the images to the acceleration of the sample. This may further increase the time necessary for completion of the measurement.

One aspect of the present invention is therefore to provide a method and a microscope that facilitate recording sample areas that are larger than the field of view of the objectives applied.

The computer program product comprises a program code for performing the inventive method when the computer program is run on a processor.

The inventive microscope and the method may be further improved by additional technical features described in the following. Those additional technical features may be arbitrarily combined with each other or may be omitted if the technical effect obtained with the omitted technical feature is not relevant to the present invention.

It is preferably the light sheet velocity, which is adapted to the sample volume velocity. This has the advantage that the light sheet velocity may be quickly and easily adjusted depending on the (a changing) sample volume velocity. Adjusting the light sheet velocity, e.g. by a light sheet actuator of the microscope of the inventive microscope is easier and faster than adjusting the sample volume velocity as the corresponding means for adjusting the light sheet velocity, e.g. the light sheet actuator has a lower inertia (resistance of an object against a change of velocity) and lower sensitivity at, respectively against an acceleration than for instance a sample holder holding the sample.

Within this disclosure, a velocity is to be understood as a physical vector quantity, which is defined, by a magnitude and direction. In some embodiments, in which a movement of e.g. the sample is only performed along one axis, one may consider a velocity as a signed quantity.

Further, within this disclosure, an oblique plane microscope is to be understood as a microscope, preferably a light sheet microscope that comprises a light sheet, which is oriented in an oblique manner in a sample volume, wherein the light sheet may be moved, preferably in a lateral direction, and wherein a sample, more generally a sample volume, may be moved relative to the optical assembly, in particular relative to an objective. The control device, the method, the computer program product as well as the microscope may in particular refer to or be applied in such a light sheet microscope.

In order to allow for scanning of the sample, one embodiment of the inventive control device is configured to adjust the light sheet velocity relative to the microscope to be different from the sample volume velocity relative to the microscope in at least one of a direction and an absolute value. This assures that the light sheet and the sample volume are not moved in the same direction with the same absolute value. If this would be the case, a static planar illumination of the sample via the light sheet would occur, which does not allow for recording of image stacks or scanning the sample.

The control device may be configured to adjust a scan velocity of the light sheet to be constant by adjusting one of a) the light sheet velocity depending on the sample volume velocity and b) the sample volume velocity, wherein the scan velocity is a velocity of the light sheet relative to the sample volume.

The scan velocity may be a superposition of the light sheet velocity and the sample volume velocity, wherein the scan velocity has the sample volume as reference frame. Consequently, if the light sheet is not moved with respect to the microscope and the sample volume is moved with a first velocity +v₁, the scan velocity v_{sc} of the light sheet with respect to the sample volume amounts to v_{sc} = -v₁.

Preferably, the control device may be configured to adjust the light sheet velocity to provide a constant scan velocity, wherein also the sample volume velocity may be adjusted, that in turn results in an adjustment of the light sheet velocity.

For performing the steps of adjusting, an embodiment of the inventive microscope may further comprise a velocity detector unit for determining at least one of the sample volume velocity, the light sheet velocity and a superposition of the sample volume velocity and the light sheet velocity.

One of said velocities may therefore be measured online or determined by for instance look up tables in which a progression of the velocities (light sheet and/or sample volume) may be stored dependent on the time elapsed since a measurement has been started.

The control device may therefore be configured to measure or determine at least one of the sample volume velocity, the light sheet velocity and the scan velocity.

In one embodiment of the inventive control device, the control device may thus be configured to at least one of decrease the light sheet velocity if the sample volume velocity is increased and increase the light sheet velocity if the sample volume velocity is decreased.

Such an increase or decrease is to be understood as an increase or decrease of the absolute value of the corresponding velocity.

If, as an example, a target scan velocity of 10 (arbitrary units) is to be achieved in the sample volume along an x-axis, i.e. v_{sc,t}=+10, a sample volume velocity of vₛᵥ=-1 results in a first scan velocity v_{sc,1}=+1, wherein the control device adjusts a first light sheet velocity v_{ls,1} to amount to v_{ls,1}=+9, thus resulting by a superposition of the two velocities in an adjusted scan velocity of v_{sc,adj}=+10 (arbitrary units).

Similarly, a sample volume velocity of -5 would result in the control device adjusting the first light sheet velocity to +5 in order to maintain the scan velocity constant.

In a further advantageous embodiment of the inventive control device, the control device may be configured to adjust an acceleration of the light sheet depending on an acceleration of the sample volume.

Thus, if the sample volume is accelerated, e.g. in order not to deform or relocate a sample provided therein, the light sheet is moved at an initially higher light sheet velocity (adjusted by the control device such that the scan velocity is constant at a predetermined target value), wherein, with further acceleration of the sample volume, the light sheet is decelerated. With increasing sample volume velocity (i.e. increasing absolute value of the velocity) the light sheet velocity decreases at a rate (this corresponds to a deceleration, i.e. change of velocity rate over time) that corresponds to the increase of velocity of the sample volume.

Thus, even if the velocity of the sample is not constant, but e.g. accelerating or decelerating, the scan velocity, i.e. a velocity with which the light sheet is scanned through the sample volume may be kept constant by the control device.

The method and the microscope according to the invention have therefore the advantage that larger volumes, i.e. volumes or samples being larger than a field of view of the objective, may be entirely and quickly be examined, wherein in particular three dimensional image stacks of the entire sample may be recorded. Each image of the image stack is recorded with an equidistant step between each image without exposing the sample to excessive forces or accelerations and without the need to adopt a frame rate of a detector, e.g. a camera that would otherwise be necessary to keep the distance between the images equidistant if the sample volume velocity would be changed.

The control device and microscope may comprise an adjustment range within which the light sheet may be movable. This adjustment range is to be understood as a range, within which the light sheet (oblique plane microscope) or an actual scan range of the light sheet (SCAPE) may be relocated, in particular moved in order to keep the scan velocity constant. The adjustment range may be defined by the light sheet actuator member, which is used for moving the light sheet. The ends of the adjustment range may be defined by the maximum and minimum deflection angle of the light sheet actuator member or by an orientation or position of the light sheet actuator member. The adjustment range may also be limited and thus be defined by the available aperture of the optical system, e.g. an objective, via which the light of the light sheet is provided into the sample volume. Additionally, the adjustment range may be defined by providing a hard aperture in the optical system. The light sheet actuator member may be a tiltable element providing a deflection, or a linearly moveable element providing a lateral displacement of the light sheet.

The control device may be configured to adjust the sample volume velocity in dependence on a position of the light sheet in the adjustment range.

Preferably, the control device may be configured to adjust the sample volume velocity such that the first direction equals the second direction if the light sheet is located in a predetermined region at the limits of the adjustment range.

Thus, it may be detected if the light sheet approaches the end, the limits or borders of the adjustment range, wherein upon detection, the control device or the microscope may initiate overcompensating as counter measure, by adjusting the sample volume velocity, such that the light sheet and the sample volume are moved in the same direction. This overcompensating allows for returning the light sheet out of the predetermined region at the limits of the adjustment range, preferably to the center of the adjustment range. The predetermines region may represent a security buffer assuring that adjusting the light sheet velocity remains possible. The angular range at which the light sheet enters the predetermined region may correspond to 20 percent of the entire adjustment range. It may also correspond to 10 or 5 percent of the adjustment range.

Within this disclosure, a position of the light sheet is to be understood to correspond to a position of a scan range in case of a SCAPE microscope. For performing the scanning and adjusting of the light sheet the same or another optical element may be applied. Exemplarily, one may use the same tilting mirror for adjusting the position of the light sheet as is used for scanning the sample volume with the light sheet.

The control device is configured to at least one of (i or ii): (i) adjust the sample volume velocity such that a first direction being a direction of the sample volume velocity is oriented in a direction opposite to a second direction being the direction of the light sheet velocity. In other words, the direction of movement of the light sheet and the direction of movement of the sample volume are directed to opposing directions, i.e. they are antiparallel, using the microscope as reference frame. Or, (ii) , adjust the sample volume velocity such that a first direction being a direction of the sample volume velocity equals a second direction being the direction of the light sheet velocity. In other words, relative to the microscope, the sample volume and the light sheet are moved into the same direction.

Resuming the example above with the target scan velocity of 10 (arbitrary units), this would be the case if the sample volume velocity amounts to -15, i.e. v_{sv,1}= -15. In this case, if the light sheet is not moved relative to the microscope, a first scan velocity of v_{sc,1}=+15 would be obtained, which is higher than the target scan velocity. In this case, the control device adjusts the light sheet velocity to v_{ls,1}=-5, thereby keeping the scan velocity at +10. In this case the sample volume velocity and the light sheet velocity have the same direction.

The above has the advantage that once the light sheet has been moved to a first adjusting direction in order to maintain the scan velocity constant the direction of movement of the light sheet may be inverted in order to remain within the adjustment range. If the amount of the sample volume is larger than the amount of the desired scan velocity inverting the direction of the light sheet and moving it back towards an initial position is possible. This allows for maintaining the light sheet within its adjustment range.

In a further advantageous embodiment, the control device may be configured to adjust the sample volume velocity such that the first direction equals the second direction if the light sheet approaches a limit of an adjustment range within which the light sheet is movable. In this embodiment, the light sheet is controlled in a manner that it remains within its adjustment range.

Here, consequently two control steps are applied, namely adjusting the light sheet velocity depending on the sample volume velocity and to control whether an adjustment of the light sheet velocity is still possible in more than one direction. This method may be termed overcompensation and allows for relocating the light sheet to its initial position, preferably this initial position corresponds to a center of the adjustment range. The second control step may trigger a feedback to the first control step, e.g. initiating a change of the sample volume velocity.

The control device may be configured to change the orientation of the first direction with respect to the second direction from a parallel orientation to an antiparallel orientation and/or from an antiparallel orientation to a parallel orientation. During a first period of time the light sheet and the sample volume may move in the same direction, whereas during a second, preferably subsequent period of time, the light sheet and the sample volume may move in opposite directions (using the microscope as reference frame in both cases). During one measurement a multitude of those periods of time may alternate each other.

The inventive control device may be configured to move the light sheet in a direction perpendicular to the light sheet, i.e. along its normal vector. The light sheet may also be located only within the sample volume and moved along a direction under an angle to its normal vector.

The inventive control device may in particular be configured to adjust one of the light sheet velocity and the sample volume velocity to position the light sheet in a center of the adjustment range. This positioning in the center of the adjustment range may be achieved if the amount of the sample volume velocity is larger than the amount of the target scan velocity (wherein both velocities are directed in opposite directions), i.e. by overcompensating the sample volume velocity.

The inventive microscope may comprise a further optical system for transmitting the light from the sample volume to the detection unit, wherein the light sheet actuator may be configured to translate the light sheet in a direction parallel to an optical axis of the further optical system.

The computer program product may be any conventional magnetic or optical storage medium or any read only memory (ROM) or random access memory (RAM) based on non-transitory storage media. The program code may be performed on a personal computer, any field programmable gate area, microcontroller and the like, in brief any integrated circuit which is configured to store a program code.

The sample volume velocity may change linearly or non-linearly over time, or remain constant. In any case, depending on the sample volume velocity, the light sheet velocity may be adjusted by the control device, such that preferably a constant scan velocity is obtained. In a different example it may be desirable that in certain regions of the sample volume a modified scan velocity is required. This is for instance the case if a region of interest is defined in which a predetermined resolution, i.e. the distance between adjacent images taken in the sample, is required, wherein outside of said region of interest a lower resolution may be sufficient. This would allow for an overview scan outside the region of interest and a more detailed scan, i.e. with higher resolution, in the region of interest. In this case, a target scan velocity may be set higher outside the region of interest and lower inside in the region of interest.

In those two different portions of the sample (inside and outside of the region of interest) the scan velocity may be set to be constant.

Another example is a so-called multiwell plate (microwell plate) in which the distinct volumes (in a well) are arranged in a pattern. The wells are separated by intermediate regions between them. In this case there is no single sample present but distinct portions, i.e. regions of interest. In order to obtain an overview over the content of all wells at the shortest time possible, the present disclosure may be beneficial. Moving the light sheet from one well to the adjacent well, i.e. over the intermediate regions, may be performed rather fast, wherein movement of the sample volume with the light sheet inside the well, i.e. inside the sample, is performed at a lower scan velocity. This results in a permanent acceleration and deceleration of the well plate, wherein the deceleration of the sample volume (when the light sheet enters a region of interest) and the acceleration of the sample volume (when the light sheet moves from the region of interest into an intermediate region between two adjacent wells) may be compensated for by the present disclosure.

Further, inside each well the light sheet velocity may also be adjusted dependent on the sample volume velocity in addition to the adjustment when entering or leaving the well. The present invention may also be applied in a microscope using remote focusing in which the focus point inside the sample volume is changed by means of an additional telescope inside the illumination light path and/or the observation light path. In this case, a remote focusing module may determine the light sheet velocity, which may be adapted to a possible velocity of the sample volume along the optical axis of the objective.

The inventive microscope, preferably the light sheet microscope, more preferably the oblique plane microscope or SCAPE microscope, may optionally perform the detection of observation light emitted or generated in the sample volume through the same optical assembly (objective) through which the illumination was performed. Thus, one and the same optical assembly (objective) may be applied as optical illumination assembly and as optical observation assembly.

Further, the optical observation assembly may generate a virtual image of the planar portion of the observation volume illuminated by the light sheet. Said virtual image may be tilted, i.e. oblique with respect to an optical axis of the optical observation assembly. The inventive microscope may comprise a further optical assembly, which is configured to be oriented with respect to the optical observation assembly under an angle, such that an optical axis of the further optical assembly is oriented essentially perpendicular to the virtual image. This allows generating a further image of said virtual image in a focal plane oriented perpendicular to the optical axis of the further optical assembly. Within this focal plane, a detector may be arranged. This further optical assembly (German: Aufrichteeinheit) thus erects the oblique virtual image. Alternatively, the tilt of the virtual image may be compensated for by a computer program product comprising a code which, when run on a computer, calculates a corrected image.

A SCAPE microscope is a particularly advantageous embodiment of an oblique plane microscope, in which the light sheet is scanned through the sample volume.

An oblique plane microscope may be provided with one single objective (i.e. similar to a SCAPE microscope), wherein the tilted image of the oblique light sheet is imaged onto the detector in a planar manner by means of an increased depth of focus and not by an objective oriented under an angle to the illumination or detection objective.

The movement of the sample volume and the corresponding adjustment of the movement of the light sheet may be repeated periodically. Thus, after a certain time (a cycle duration or period time), the light sheet may return to its initial position. As it is to be kept within its adjustment range it may perform a periodic movement around a center of said adjustment range. The light sheet may arrive at its initial position once, twice or several times during the period of time.

In a preferred embodiment, the present disclosure allows for a constant scan velocity and a periodic movement of the light sheet as well as a periodic movement of the sample volume. This allows for scanning of arbitrary large samples.

As an alternative, one may capture an image only during a certain time span , particularly until the light sheet arrived at a maximum position within its adjustment range, wherein thereafter image capture is stopped and the light sheet is moved back to its initial position. Then, the system may continue movement of the sample volume.

The easiest case is to adjust the velocity of the light sheet and the velocity of the sample volume such that after the measurement has been finished, the light sheet has not arrived at a border of its adjustment range. Consequently after the end of the measurement the light sheet may be returned to its initial position.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment may comprise an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

In the following, examples of the present disclosure will be shown with reference to the accompanying figures, only exemplary embodiments will be described, which are not intended to narrow a possible scope of protection which is defined by the claims. In the exemplary embodiments technical features may be omitted if the technical effect of the omitted technical feature is not relevant to the subject matter of this disclosure.

The figures show:
- Fig. 1: a schematic drawing of the inventive microscope and the inventive control device;
- Fig. 2: a schematic working principle of the control device with non-constant acceleration;
- Fig. 3: a schematic working principle of the control device with constant acceleration;
- Fig. 4: a schematic example of a possible movement pattern and the corresponding adjustment performed by the control device;
- Fig. 5: a further schematic example of another possible movement pattern and the corresponding adjustment performed by the control device;
- Fig. 6: a further schematic example of yet another possible movement pattern and the corresponding adjustment performed by the control device;

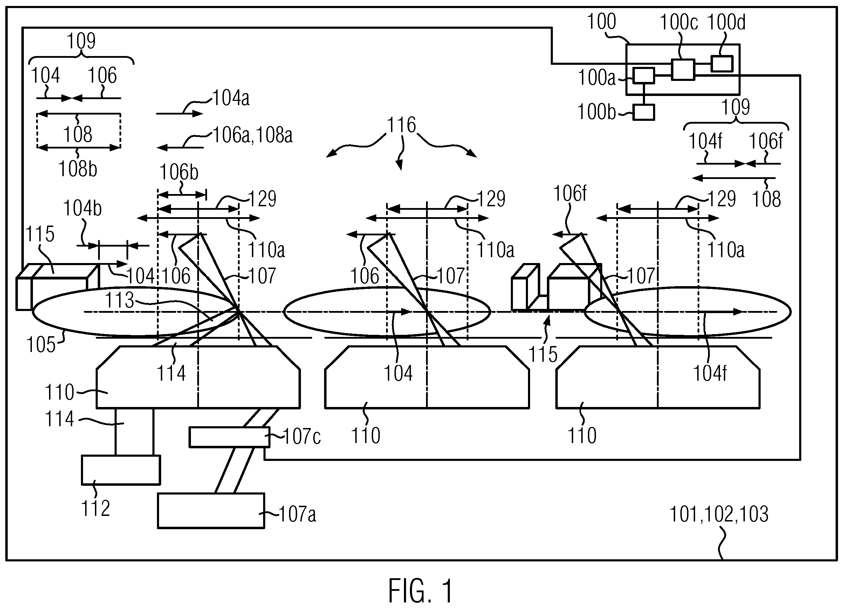

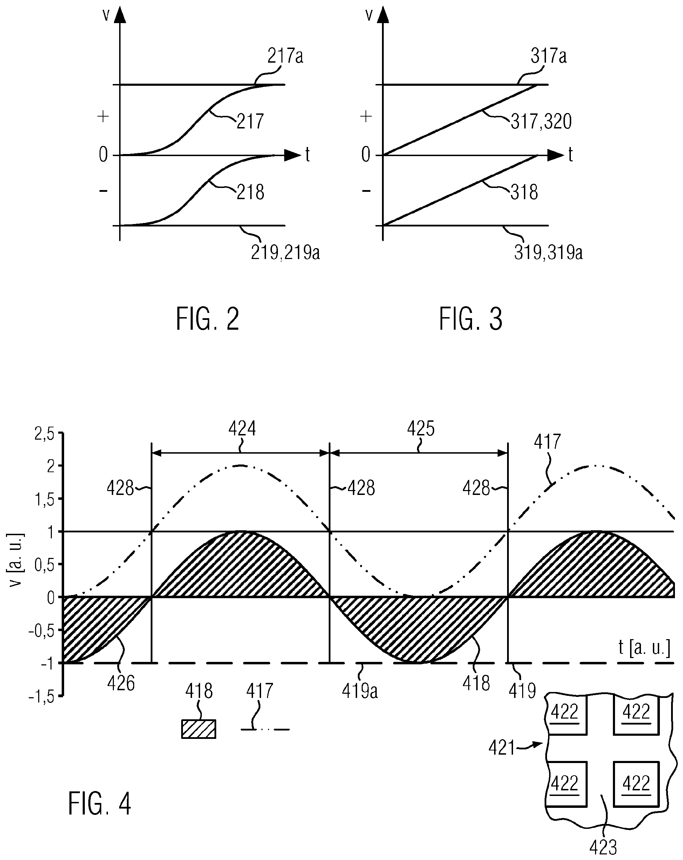

In the following figure description, elements introduced in the figures are indicated by a preceding number corresponding to the figure in which the features are introduced. A technical feature appearing for the first time in Fig. 2 is thus indicated by the reference numeral 2xx. The same feature may be addressed in subsequent Figs., wherein said feature is then indicated by reference numerals 3xx, 4xx, 5xx and so on. Similarly, a technical feature first described in Fig. 4 and indicated with reference numeral 4yy may be addressed in Fig. 1 as well, wherein it will be referred to as 1yy in Fig. 1. In the list of reference numerals, technical features are only given with one reference numeral. Exemplarily, the speed of the sample volume is a given with reference numeral 217, wherein this reference numeral also comprises reference numerals 117, 317, 417, 517 and 617 if the speed of the sample volume is mentioned in the Figs. 1, 3, 4, 5 or 6. The same applies for the other features given in the list of reference numerals.

Fig. 1 is a schematic drawing of the inventive microscope 101. Microscope 101 shown may be embodied as an oblique plane microscope 102 or a SCAPE microscope 103.

Fig. 1 schematically shows a light sheet generator 107a that generates a light sheet 107 in a sample volume 105 of the microscope 101.

The microscope 11 further comprises an optical system 110 for transmitting the light 107b from the light sheet generator 107a through the optical system 110 into the sample volume 105.

Fig. 1 further shows a light sheet actuator 107c, which is exemplarily shown as a transmissive device, but may also work in reflection. The light sheet actuator 107c allows for adjusting a light sheet velocity 106.

The light sheet velocity 106 is characterized by a direction 106a and an absolute value 106b, i.e. they represent a connector unit 111.

Fig. 1 further shows a detection unit 112 which detects a light distribution 113 in the sample volume 105, wherein the light distribution 113 is generated by the light sheet 107 and transmitted (in the embodiment shown) via the optical system 110 towards the detection unit 112. Observation light 114 is thus transmitted via the same optical system 110 towards the detection unit 112.

The microscope 101 further comprises a control device 100 that is connected with the light sheet actuator 107c as well as with a sample actuator 115 that is configured for adjusting the a sample volume velocity 104 of the sample volume 105.

In the embodiment shown in Fig. 1, the light sheet actuator 107c and the sample actuator 115 are comprised in the microscope 101, wherein in a different embodiment of those features may be comprised in the control device 100.

Fig. 1 shows three positions 116 of the sample volume 105 with respect to the microscope 101. This time series of the positions 116 describes a movement of the sample volume 105 with the sample volume velocity 104 in a direction of the sample volume velocity 104a with an absolute value of the sample volume velocity 104b.

Due to a superposition 109 of the light sheet velocity 106 and the sample volume velocity 104, the light sheet 107 is moved relative to the sample volume 105 with a scan velocity 108.

As the scan velocity 108 is considered with the sample volume 105 being the reference frame, and as the directions 104a and 106a of the sample volume velocity and the light sheet velocity, respectively, are oriented opposite to each other, the absolute value 104b and 106b of the sample volume velocity and the light sheet velocity, respectively, are added (summed up) to yield an absolute value of the scan velocity 108b. A direction of the scan velocity 108a equals the direction of the light sheet velocity 106a.

The control device 100 may comprise a velocity evaluation module 100a which may be coupled to a velocity detector 100b, which is only schematically shown for the sake of clarity. In a different embodiment, the velocity evaluation module 100a and the velocity detector 100b may be part of the microscope 101 and may provide velocity data (not shown) directly to a computation module 100c. The computation module 100c may be directly connected with the sample actuator 115 and/or the light sheet actuator 107c, thereby allowing the control device 100 to adjust the sample volume velocity 104 and/or the light sheet velocity 106. The control device 100 may further comprise a storage module 100d, in which calculation rules, movement patterns data or further parameter of the control device or the microscope may be stored.

It is for instance possible that the velocity of the light sheet 107 or the sample volume 105 is not measured but determined by reading a lookup table, which may be stored in said storage module 100d.

Fig. 1 also shows a field of view 110a of the optical system 110. Recording of images of the sample volume 105 is therefore limited to this field of view 110a, thereby requiring moving the sample volume 1054 examination of the entire sample volume 105.

In the position 116 on the right side of Fig. 1, a situation is shown, in which the sample volume velocity is changed to a second sample volume velocity 104f. In accordance with this changed second sample volume velocity 104f the control device 100 modifies the light sheet velocity to a second light sheet velocity 106f. The superposition 109 of both results again in the scan velocity 108, which remains constant in all three positions 116 shown.

In Fig. 2 and Fig. 3 a speed v is shown in dependence on a time t. The graphs show a speed of the sample volume 217, 317 and a speed of the light sheet 218, 318. The speeds 217, 317 and 218, 318 are to be understood as signed values of the corresponding absolute value 104b and 106b of the sample volume velocity and in the light sheet velocity, respectively (see Fig. 1).

In the graphs, a scan speed 219, 319 is defined, the value of which corresponds to the absolute value of the scan velocity 108b, wherein the direction of the scan velocity 108a is considered by the mathematical sign (this is a question of a positive direction, i.e. the signs of the speeds shown may be opposite). A direction of movement of the sample volume (not shown) is defined to be positive. Consequently, the oppositely directed movement of the light sheet results in the speed of the light sheet 218, 38 being negative. As the scan velocity 108 is considered to be directed opposite the sample volume velocity 104, also the scan speed 219, 319 is negative.

The scan speed 219, 319 is a predetermined value 219a, 319a. In Fig. 2, the speed of the sample volume 217 increases non-linearly from zero to an end value 217a. The control device 100 (not shown) adjusts the speed of the light sheet 218 depending on the speed of the sample volume 217, such that a constant scan speed 219 is obtained.

In Fig. 3 the speed of the sample volume 317 is increased at a constant acceleration 320, wherein, as in Fig. 2, the speed of the light sheet 318 is adjusted accordingly in order to arrive at a constant scan speed 319 that corresponds to the predetermined value 319a.

In Fig. 4 to Fig. 6 further possible movement patterns are shown.

All Figs. 4 to 6 show the speed v over the time t.

In Fig. 4 a periodic movement pattern 420 is shown for the speed of the sample volume 417 and the speed of the light sheet 418. The scan speed 419 is constant (which is realized by the control device 100 (not shown), which adjusts the speed of the light sheet 418 in dependence on the speed of the sample volume 417) and amounts to -1 in arbitrary units.

This pattern may be applied in case a multiwell plate 421 is examined. Such a multiwell plate 421 comprises wells 422 and intermediate regions 423.

Commonly those multiwell plates 421 may be larger than a field of view 110a of an optical system 110, where in the intermediate regions 423 are of no interest for a measurement. Within said intermediate regions 423 the sample volume, i.e. the entire multiwell plate 421 may be moved faster. In the graph, a first scan range 424 and a second scan range 425 are shown. In the first scan range 424 the field of view 110a is moved over the intermediate regions 423 (i.e. faster), wherein in the second scan range 425 the field of view is located in a well 422. In the second scan range 425, the speed of the sample volume 417 is lower, thereby introducing less disturbance to the sample.

The graph also shows a shaded region 426 which corresponds to a distance 427 traveled by the light sheet 107.

Between the first scan range 424 and the second scan range 425 the speed of the light sheet 418 changes its sign. At these crossing points 428, the speed of the sample volume 417 corresponds in its absolute value to the predetermined value 419a of the scan speed 419. That is, at the crossing points 428 the light sheet 107 is not translated and the speed of the sample volume 417 causes the (when the microscope 101 is taken as reference) static light sheet 107 to scan through the sample volume 105 with the scan speed 419.

In the first scan 424 the light sheet 107 is moved in a positive direction, wherein in the second scan range 425 the light sheet 107 is moved in a negative direction (negative speed of the light sheet 418). The movement of the light sheet 107 in the second scan range 425 therefore compensates the movement of the light sheet 107 in the first scan range 424.

Overall, the light sheet 107 oscillates around a center or initial position (not shown), which is centered in and adjustment range.

The adjustment range 129 is shown in Fig. 1.

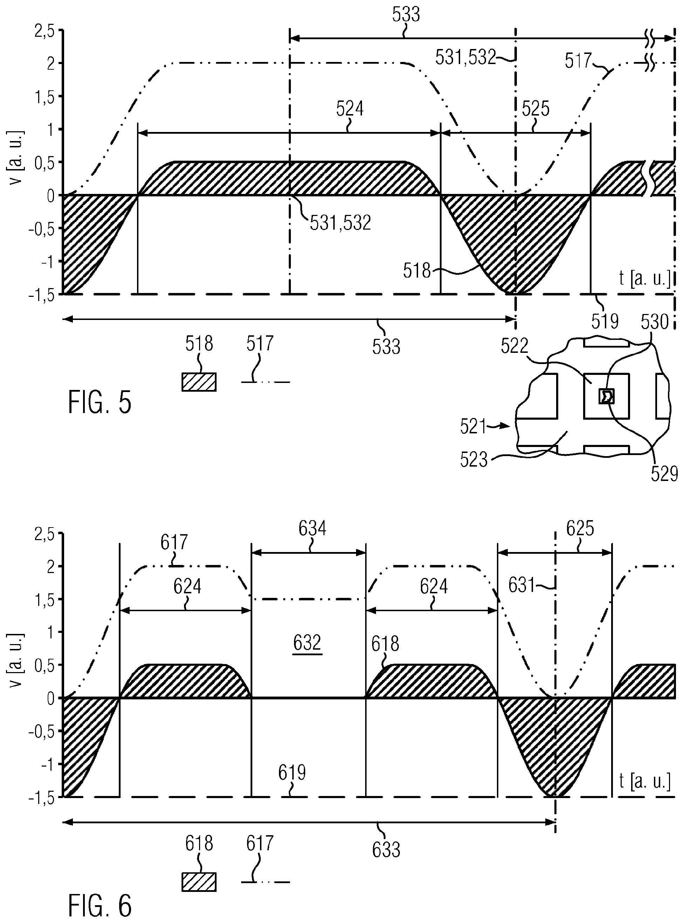

In the Figs. 5 and 6 non-periodic movement patterns are shown.

In Fig. 5 a case is shown, in which a multiwell plate 521 comprises wells 522 in which a sample 529 is located in the center of the well 522. The sample 529 defines a region of interest 530 in which a high resolution of a measurement is desired. The first scan range 524 of Fig. 5 therefore covers the intermediate regions 523 and portions of the well 522 outside the region of interest 530 to quickly move over said regions of lower or no (the intermediate regions 523) interest.

In the second scan range 525 the speed of the sample volume 517 is reduced for improving the measurement in the region of interest 530. The speed of the light sheet 518 is adapted in order to maintain the scan speed 519 constant.

During the movement pattern, the light sheet 107 arrives at a return point 531 again at an initial position 532 of the light sheet 107.

Such a return point 531 is for example again achieved after one period of time 533. The light sheet 107 is thus only moved around its initial position 532 and remains within its adjustment range 129. In Fig. 5, the period of time 533 is drawn twice, wherein in each period of time 533, the light sheet 107 starts moving at its initial position 532, returns to its initial position 532, and finally returns again to the initial position 532. In any case, after the period of time 533, the light sheet returns to its initial position 532. The initial position may also be reached within the period of time 533 once, twice or even several times.

Fig. 6 shows a movement pattern which is similar to the one shown in Fig. 5. It differs from the one shown in Fig. 5 in that a third scan range 634 is comprised in between the split first scan range 624.

In this third scan range 634 the light sheet 107 remains static with the microscope 101 as reference frame, wherein the speed of the sample volume 617 in this third scan range 634 result in the constant scan speed 619. In the third scan range 634 the light sheet 107 is in its initial position 632. This is also the case at the return 631 after the period of time 633.

The shown exemplary graphs may be arbitrarily modified, for instance if during a scan in a multiwell plate and end of said plate is approached, wherein in a transition movement described by a curve to locate the field of view of the optical assembly to a position translated vertically to the direction of the scanning the speed of the sample volume may for instance be decreased, in order not to delocate the sample due to its inertia.

Similarly, it may also be possible that during the transition of the field of view of the optical assembly over an intermediate region of a multiwell plate, the scan speed may be increased. This is not relevant in the intermediate region as no relevant content is provided therein, but this increase of the speeds help in effectively faster scanning the multiwell plate.

### REFERENCE NUMERALS

- 100: control device
- 100a: velocity evaluation module
- 100b: velocity detector
- 100c: computation module
- 100d: storage module
- 101: microscope
- 101a: light sheet generator
- 101b: light
- 101c: light sheet actuator
- 102: oblique plane microscope
- 103: SCAPE microscope
- 104: sample volume velocity
- 104a: direction of the sample volume velocity
- 104b: absolute value of the sample volume velocity
- 104f: second sample volume velocity
- 105: sample volume
- 106: light sheet velocity
- 106f: second light sheet velocity
- 106a: direction of the light sheet velocity
- 106b: absolute value of the light sheet velocity
- 107: light sheet
- 108: scan velocity
- 108a: direction of the scan velocity
- 108b: absolute value of the scan velocity
- 109: superposition
- 110: optical system
- 110a: field of view
- 111: vector unit
- 112: detector unit
- 113: light distribution
- 114: observation lights
- 115: sample actuator
- 116: position
- 129: adjustment range 129
- 217: speed of the sample volume
- 217a: end value
- 218: speed of the light sheet
- 219: scan speed
- 219a: predetermined value
- 220: acceleration
- 420: periodic movement pattern
- 421: multiwell plate
- 422: well
- 423: intermediate region
- 424: first scan range
- 425: second scan range
- 426: shaded region
- 427: distance
- 428: crossing point
- 529: sample
- 530: region of interest
- 531: return point
- 532: initial position
- 533: period of time
- 634: third scan range
- v: speed
- t: time

## Claims

1. Microscope (101), such as an oblique plane microscope (102) or a SCAPE microscope (103), comprising
- a light sheet generator for generating a light sheet in a sample volume (105) of the microscope (101);
- an optical system (110) for transmitting light (107b) into the sample volume (105);
- a light sheet actuator (107c) for adjusting a light sheet velocity (106);
- a sample actuator (115) for adjusting a sample volume velocity (104) of the sample volume (105);
- a detection unit (112) for detecting a light distribution (113) in the sample volume (105), the light distribution being generated by the light sheet (107); and
- a control device (100) for controlling the microscope (101),
wherein the control device (100) is configured to
- adjust the sample volume velocity (104) of the sample volume (105) of the microscope (101) relative to the microscope (101); and to
- adjust the light sheet velocity (106) of the light sheet (107) of the microscope (101) relative to the microscope (101) depending on the sample volume velocity (104); and at least one of:
- adjust the sample volume velocity (104) such that a first direction being a direction (104a) of the sample volume velocity (104) is oriented in a direction opposite to a second direction being the direction (106a) of the light sheet velocity (106); or
- adjust the sample volume velocity (104) such that the first direction equals the second direction.

2. Microscope (101) according to claim 1, further comprising a velocity detector unit (100b) for determining at least one of the sample volume velocity (104), the light sheet velocity (106) and a superposition of the sample volume velocity (104) and the light sheet velocity (106).

3. Microscope (101) according to claim 1 or 2, comprising a further optical system for transmitting light from the sample volume (105) to the detection unit (112), wherein the light sheet actuator is configured to translate the light sheet (107) in a direction parallel to an optical axis of the further optical system.

4. Microscope (101) according to any one of claims 1 to 3, wherein the control device (100) is configured to adjust the light sheet velocity (106) relative to the microscope (101) to be different from the sample volume velocity (104) relative to the microscope (101) in at least one of a direction (104a, 106a) and an absolute value(104b, 106b).

5. Microscope (101) according to any one of claims 1 to 4, wherein the control device (100) is configured to adjust a scan velocity (108) of the light sheet (107) to be constant by adjusting one of the light sheet velocity (106) depending on the sample volume velocity (104) and the sample volume velocity (104), wherein the scan velocity (108) is a velocity of the light sheet (107) relative to the sample volume (105).

6. Microscope (101) according to any one of claims 1 to 5, wherein the control device (100) is configured to at least one of decrease the light sheet velocity (106) if the sample volume velocity (104) is increased and increase the light sheet velocity (106) if the sample volume velocity (104) is decreased.

7. Microscope (101) according to any one of claims 1 to 6, wherein the control device (100) is configured to adjust the sample volume velocity (104) in dependence on a position of the light sheet (107) in an adjustment range (129).

8. Microscope (101) according to claim 7, wherein the control device (100) is configured to adjust the sample volume velocity (104) such that the first direction (104a) equals the second direction (106a) if the light sheet (107) is located in a predetermined region at the limits of the adjustment range (129).

9. Microscope (101) according to any one of claims 1 to 8, wherein the control device (100) is configured to change the orientation of the first direction (104a) with respect to the second direction (106a) from a parallel orientation to an antiparallel orientation and/or from an antiparallel orientation to a parallel orientation.

10. Microscope (101) according to any one of claims 1 to 9, wherein the control device (100) is configured to adjust an acceleration of the light sheet (107) depending on an acceleration of the sample volume (105).

11. Microscope (101) according to any one of claims 1 to 10, wherein the control device (100) is configured to measure or determine at least one of the sample volume velocity (104), the light sheet velocity (106) and the scan velocity (108).

12. Microscope (101) according to any one of claims 1 to 11, wherein the control device (100) is configured to move the light sheet (107) in a direction perpendicular to the light sheet (107).

13. Microscope (101) according to any one of claims 7 to 12, wherein the control device (100) is configured to adjust one of the light sheet velocity (106) and the sample volume velocity (104) to position the light sheet (107) in a center of the adjustment range (129).

14. Method of controlling a microscope (101), such as an oblique plane microscope (102) or a SCAPE microscope (103), wherein the method comprises
- adjusting a sample volume velocity (104) of a sample volume (105);
- adjusting a light sheet velocity (106) of a light sheet (107) depending on the sample volume velocity (104); and at least one of:
- adjusting the sample volume velocity (104) such that a first direction being a direction (104a) of the sample volume velocity (104) is oriented in a direction opposite to a second direction being the direction (106a) of the light sheet velocity (106), or
- adjusting the sample volume velocity (104) such that the first direction equals the second direction.

## Patentansprüche

1. Mikroskop (101), wie zum Beispiel ein Schrägebenenmikroskop (102) oder ein SCAPE-Mikroskop (103), umfassend
- einen Lichtblatterzeuger zum Erzeugen eines Lichtblatts in einem Probenvolumen (105) des Mikroskops (101);
- ein optisches System (110) zum Übertragen von Licht (107b) in das Probenvolumen (105);
- einen Lichtblattaktor (107c) zum Verstellen einer Lichtblattgeschwindigkeit (106);
- einen Probenaktor (115) zum Verstellen einer Probenvolumengeschwindigkeit (104) des Probenvolumens (105);
- eine Detektionseinheit (112) zum Detektieren einer Lichtverteilung (113) in dem Probenvolumen (105), wobei die Lichtverteilung durch das Lichtblatt (107) erzeugt wird; und
- eine Steuerungsvorrichtung (100) zum Steuern des Mikroskops (101),
wobei die Steuerungsvorrichtung (100) dazu konfiguriert ist,
- die Probenvolumengeschwindigkeit (104) des Probenvolumens (105) des Mikroskops (101) relativ zu dem Mikroskop (101) zu verstellen; und
- die Lichtblattgeschwindigkeit (106) des Lichtblatts (107) des Mikroskops (101) relativ zu dem Mikroskop (101) in Abhängigkeit von der Probenvolumengeschwindigkeit (104) zu verstellen; und mindestens eines von:
- die Probenvolumengeschwindigkeit (104) so zu verstellen, dass eine erste Richtung, die eine Richtung (104a) der Probenvolumengeschwindigkeit (104) ist, in einer zu einer zweiten Richtung entgegengesetzten Richtung orientiert ist, wobei die zweite Richtung die Richtung (106a) der Lichtblattgeschwindigkeit (106) ist; oder
- die Probenvolumengeschwindigkeit (104) so zu verstellen, dass die erste Richtung der zweiten Richtung entspricht.

2. Mikroskop (101) nach Anspruch 1, weiter umfassend eine Geschwindigkeitsdetektoreinheit (100b) zum Bestimmen von mindestens einem aus der Probenvolumengeschwindigkeit (104), der Lichtblattgeschwindigkeit (106) und einer Überlagerung der Probenvolumengeschwindigkeit (104) und der Lichtblattgeschwindigkeit (106).

3. Mikroskop (101) nach Anspruch 1 oder 2, umfassend ein weiteres optisches System zum Übertragen von Licht von dem Probenvolumen (105) zu der Detektionseinheit (112), wobei der Lichtblattaktor dazu konfiguriert ist, das Lichtblatt (107) in einer zu einer optischen Achse des weiteren optischen Systems parallelen Richtung zu verschieben.

4. Mikroskop (101) nach einem der Ansprüche 1 bis 3, wobei die Steuerungsvorrichtung (100) dazu konfiguriert ist, die Lichtblattgeschwindigkeit (106) relativ zu dem Mikroskop (101) so zu verstellen, dass sie sich von der Probenvolumengeschwindigkeit (104) relativ zu dem Mikroskop (101) in mindestens einem aus einer Richtung (104a, 106a) und einem Absolutwert (104b, 106b) unterscheidet.

5. Mikroskop (101) nach einem der Ansprüche 1 bis 4, wobei die Steuerungsvorrichtung (100) dazu konfiguriert ist, eine Abtastgeschwindigkeit (108) des Lichtblatts (107) dadurch konstant zu verstellen, dass eines aus der Lichtblattgeschwindigkeit (106) in Abhängigkeit von der Probenvolumengeschwindigkeit (104) und der Probenvolumengeschwindigkeit (104) verstellt wird, wobei die Abtastgeschwindigkeit (108) eine Geschwindigkeit des Lichtblatts (107) relativ zu dem Probenvolumen (105) ist.

6. Mikroskop (101) nach einem der Ansprüche 1 bis 5, wobei die Steuerungsvorrichtung (100) dazu konfiguriert ist, mindestens eines von die Lichtblattgeschwindigkeit (106) zu verringern, wenn die Probenvolumengeschwindigkeit (104) erhöht wird, und die Lichtblattgeschwindigkeit (106) zu erhöhen, wenn die Probenvolumengeschwindigkeit (104) verringert wird.

7. Mikroskop (101) nach einem der Ansprüche 1 bis 6, wobei die Steuerungsvorrichtung (100) dazu konfiguriert ist, die Probenvolumengeschwindigkeit (104) in Abhängigkeit von einer Position des Lichtblatts (107) in einem Verstellbereich (129) zu verstellen.

8. Mikroskop (101) nach Anspruch 7, wobei die Steuerungsvorrichtung (100) dazu konfiguriert ist, die Probenvolumengeschwindigkeit (104) so zu verstellen, dass die erste Richtung (104a) der zweiten Richtung (106a) entspricht, wenn sich das Lichtblatt (107) in einem vorbestimmten Bereich an den Grenzen des Verstellbereichs (129) befindet.

9. Mikroskop (101) nach einem der Ansprüche 1 bis 8, wobei die Steuerungsvorrichtung (100) dazu konfiguriert ist, die Orientierung der ersten Richtung (104a) in Bezug auf die zweite Richtung (106a) von einer parallelen Orientierung zu einer antiparallelen Orientierung und/oder von einer antiparallelen Orientierung zu einer parallelen Orientierung zu ändern.

10. Mikroskop (101) nach einem der Ansprüche 1 bis 9, wobei die Steuerungsvorrichtung (100) dazu konfiguriert ist, eine Beschleunigung des Lichtblatts (107) in Abhängigkeit von einer Beschleunigung des Probenvolumens (105) zu verstellen.

11. Mikroskop (101) nach einem der Ansprüche 1 bis 10, wobei die Steuerungsvorrichtung (100) dazu konfiguriert ist, mindestens eines aus der Probenvolumengeschwindigkeit (104), der Lichtblattgeschwindigkeit (106) und der Abtastgeschwindigkeit (108) zu messen oder zu bestimmen.

12. Mikroskop (101) nach einem der Ansprüche 1 bis 11, wobei die Steuerungsvorrichtung (100) dazu konfiguriert ist, das Lichtblatt (107) in einer zu dem Lichtblatt (107) senkrechten Richtung zu bewegen.

13. Mikroskop (101) nach einem der Ansprüche 7 bis 12, wobei die Steuerungsvorrichtung (100) dazu konfiguriert ist, eines aus der Lichtblattgeschwindigkeit (106) und der Probenvolumengeschwindigkeit (104) zu verstellen, um das Lichtblatt (107) in einer Mitte des Verstellbereichs (129) zu positionieren.

14. Verfahren zum Steuern eines Mikroskops (101), wie zum Beispiel eines Schrägebenenmikroskops (102) oder eines SCAPE-Mikroskops (103), wobei das Verfahren umfasst
- ein Verstellen einer Probenvolumengeschwindigkeit (104) eines Probenvolumens (105);
- ein Verstellen einer Lichtblattgeschwindigkeit (106) eines Lichtblatts (107) in Abhängigkeit von der Probenvolumengeschwindigkeit (104); und mindestens eines von:
- ein Verstellen der Probenvolumengeschwindigkeit (104) so, dass eine erste Richtung, die eine Richtung (104a) der Probenvolumengeschwindigkeit (104) ist, in einer zu einer zweiten Richtung entgegengesetzten Richtung orientiert ist, wobei die zweite Richtung die Richtung (106a) der Lichtblattgeschwindigkeit (106) ist, oder
- ein Verstellen der Probenvolumengeschwindigkeit (104) so, dass die erste Richtung der zweiten Richtung entspricht.

## Revendications

1. Microscope (101), tel qu'un microscope à plan oblique (102) ou un microscope SCAPE (103), comprenant
- un générateur de feuillet de lumière pour générer un feuillet de lumière dans un volume d'échantillon (105) du microscope (101) ;
- un système optique (110) pour transmettre de la lumière (107b) dans le volume d'échantillon (105) ;
- un actionneur de feuillet de lumière (107c) pour régler une vitesse du feuillet de lumière (106) ;
- un actionneur d'échantillon (115) pour régler une vitesse du volume d'échantillon (104) du volume d'échantillon (105) ;
- une unité de détection (112) pour détecter une distribution lumineuse (113) dans le volume d'échantillon (105), la distribution lumineuse étant générée par le feuillet de lumière (107) ; et
- un dispositif de commande (100) pour commander le microscope (101),
dans lequel le dispositif de commande (100) est configuré pour
- régler la vitesse du volume d'échantillon (104) du volume d'échantillon (105) du microscope (101) par rapport au microscope (101) ; et pour
- régler la vitesse du feuillet de lumière (106) du feuillet de lumière (107) du microscope (101) par rapport au microscope (101) en fonction de la vitesse du volume d'échantillon (104) ; et au moins un de :
- régler la vitesse du volume d'échantillon (104) de sorte qu'une première direction étant une direction (104a) de la vitesse du volume d'échantillon (104) soit orientée dans une direction opposée à une seconde direction étant la direction (106a) de la vitesse du feuillet de lumière (106) ; ou
- régler la vitesse du volume d'échantillon (104) de sorte que la première direction soit égale à la seconde direction.

2. Microscope (101) selon la revendication 1, comprenant en outre une unité détectrice de vitesse (100b) pour déterminer au moins une de la vitesse du volume d'échantillon (104), de la vitesse du feuillet de lumière (106) et d'une superposition de la vitesse du volume d'échantillon (104) et de la vitesse du feuillet de lumière (106).

3. Microscope (101) selon la revendication 1 ou la revendication 2, comprenant un autre système optique pour transmettre de la lumière depuis le volume d'échantillon (105) vers l'unité de détection (112), l'actionneur de feuillet de lumière étant configuré pour translater le feuillet de lumière (107) dans une direction parallèle à un axe optique de l'autre système optique.

4. Microscope (101) selon l'une quelconque des revendications 1 à 3, dans lequel le dispositif de commande (100) est configuré pour régler la vitesse du feuillet de lumière (106) par rapport au microscope (101) de manière à être différente de la vitesse du volume d'échantillon (104) par rapport au microscope (101) dans au moins une de : une direction (104a, 106a) et une valeur absolue (104b, 106b).

5. Microscope (101) selon l'une quelconque des revendications 1 à 4, dans lequel le dispositif de commande (100) est configuré pour régler une vitesse de balayage (108) du feuillet de lumière (107) de manière à être constante par le réglage de l'une des vitesses suivantes : la vitesse du feuillet de lumière (106) en fonction de la vitesse du volume d'échantillon (104), et la vitesse du volume d'échantillon (104), la vitesse de balayage (108) étant une vitesse du feuillet de lumière (107) par rapport au volume d'échantillon (105).

6. Microscope (101) selon l'une quelconque des revendications 1 à 5, dans lequel le dispositif de commande (100) est configuré pour au moins un parmi : diminuer la vitesse du feuillet de lumière (106) si la vitesse du volume d'échantillon (104) est augmentée et augmenter la vitesse du feuillet de lumière (106) si la vitesse du volume d'échantillon (104) est diminuée.

7. Microscope (101) selon l'une quelconque des revendications 1 à 6, dans lequel le dispositif de commande (100) est configuré pour régler la vitesse du volume d'échantillon (104) en fonction d'une position du feuillet de lumière (107) dans une plage de réglage (129).

8. Microscope (101) selon la revendication 7, dans lequel le dispositif de commande (100) est configuré pour régler la vitesse du volume d'échantillon (104) de sorte que la première direction (104a) soit égale à la seconde direction (106a) si le feuillet de lumière (107) est situé dans une région prédéterminée aux limites de la plage de réglage (129).

9. Microscope (101) selon l'une quelconque des revendications 1 à 8, dans lequel le dispositif de commande (100) est configuré pour modifier l'orientation de la première direction (104a) par rapport à la seconde direction (106a) d'une orientation parallèle à une orientation antiparallèle et/ou d'une orientation antiparallèle à une orientation parallèle.

10. Microscope (101) selon l'une quelconque des revendications 1 à 9, dans lequel le dispositif de commande (100) est configuré pour régler une accélération du feuillet de lumière (107) en fonction d'une accélération du volume d'échantillon (105).

11. Microscope (101) selon l'une quelconque des revendications 1 à 10, dans lequel le dispositif de commande (100) est configuré pour mesurer ou déterminer au moins une de la vitesse du volume d'échantillon (104), de la vitesse du feuillet de lumière (106) et de la vitesse de balayage (108).

12. Microscope (101) selon l'une quelconque des revendications 1 à 11, dans lequel le dispositif de commande (100) est configuré pour déplacer le feuillet de lumière (107) dans une direction perpendiculaire au feuillet de lumière (107).

13. Microscope (101) selon l'une quelconque des revendications 7 à 12, dans lequel le dispositif de commande (100) est configuré pour régler l'une parmi la vitesse du feuillet de lumière (106) et la vitesse du volume d'échantillon (104) pour positionner le feuillet de lumière (107) dans un centre de la plage de réglage (129).

14. Procédé de commande d'un microscope (101), tel qu'un microscope à plan oblique (102) ou un microscope SCAPE (103), dans lequel le procédé comprend
- le réglage d'une vitesse du volume d'échantillon (104) d'un volume d'échantillon (105) ;
- le réglage d'une vitesse du feuillet de lumière (106) d'un feuillet de lumière (107) en fonction de la vitesse du volume d'échantillon (104) ; et au moins un de :
- le réglage de la vitesse du volume d'échantillon (104) de sorte qu'une première direction étant une direction (104a) de la vitesse du volume d'échantillon (104) soit orientée dans une direction opposée à une seconde direction étant la direction (106a) de la vitesse du feuillet de lumière (106), ou
- le réglage de la vitesse du volume d'échantillon (104) de sorte que la première direction soit égale à la seconde direction.
